# EUROPÄISCHE PATENTANMELDUNG

(11) **EP 0 528 144 A1**
(43) Veröffentlichungstag der Anmeldung: **24.02.1993**
(21) Anmeldenummer: 92110886.6
(22) Anmeldetag: 26.06.1992
(51) Int. Cl.: B62D 53/06, B62D 21/20

(54) **Sattelanhänger**

(30) Priorität: 16.08.1991 DE 9110120 U
(71) Anmelder: Maschinenfabriken Bernard Krone GmbH, D-48480 Spelle (DE)
(72) Erfinder: Focks, Hubert, W-4450 Lingen/Ems (DE); Evers, Heinz, W-4472 Haren-Tinnen (DE)
(74) Vertreter: Busse & Busse Patentanwälte

(57) **Zusammenfassung**

Ein Sattelanhänger, insbesondere für Container, weist einen vorderen Chassisteil (1) und einen sich daran rückwärts anschließenden Chassisteil auf, der zwei zu einer Längsmittelebene (14) symmetrische Längsrahmenstreben (15,16) als Hauptträger, Querrahmenstreben (30,32) sowie eine oder mehrere Radachsen (4,5,6) umfaßt. Das Chassis ist dabei dreiteilig ausgebildet, wobei der mittlere Chassisteil (2) ein Standardsegment bildet und das vordere und das hintere Chassisteil (1,3) als in Länge und/oder Ausbildung variabel vorfertigbare Anbauteile (10,11;110,111;210,211) vorgesehen und mit dem Standardsegment jeweils im Bereich von Anschlußprofilen verbunden sind.

## Beschreibung

Die Erfindung bezieht sich auf einen Sattelanhänger, insbesondere für Container, gemäß dem Oberbegriff des Anspruchs 1.

Der Erfindung liegt die Aufgabe zugrunde, einen Sattelanhänger, insbesondere für Container der aus EP 0 312 626 A1 bekannten Art, zu schaffen, dessen Chassis mit geringem Aufwand in unterschiedlichen Bauformen ausführbar ist.

Die Erfindung löst diese Aufgabe durch einen Sattelanhänger mit den Merkmalen des Anspruchs 1. Hinsichtlich wesentlicher weiterer Ausgestaltungen wird auf die Ansprüche 2 bis 14 verwiesen.

Mit der erfindungsgemäßen Ausbildung des Chassis für den Sattelanhänger als ein dreiteiliges Variationsgestell, dessen mittlerer Teil als Standardsegment ausgebildet ist, kann die Verwirklichung unterschiedlicher Bauformen von Sattelanhängern wesentlich vereinfacht und der Bauaufwand gesenkt werden. Dabei können die Hauptträger des Standardsegments mit denen der Zusatzsegmente im Bereich von einfachen Verbindungsplatten als Anschlußprofilen mit hinreichender Stabilität und Verwindungssteifigkeit zu einem Fahrgestell verschweißt werden. Mit variablen vorderen bzw. hinteren Segmenten kann das Standardsegment zu einem Sattelanhänger in den verschiedensten Bauformen komplettiert werden, so daß wechselnden kundenspezifischen Anforderungen durch eine Herstellung mit vermindertem technologischen Aufwand Rechnung getragen werden kann.

Weitere Einzelheiten und Vorteile ergeben sich aus der nachfolgenden Beschreibung und der Zeichnung, die mehrere Ausführungsbeispiele eines erfindungsgemäßen Sattelanhängers schematisch veranschaulicht. In der Zeichnung zeigen:
- Fig. 1: eine schematische Seitenansicht eines Sattelanhängers mit erfindungsgemäßem Fahrgestell vor der Montage,
- Fig. 2: eine Draufsicht auf die Darstellung gemäß Fig. 1,
- Fig. 3: ein längsrandseitig erweitertes Fahrgestell in einer Draufsicht ähnlich Fig. 2,
- Fig. 4: eine schematische Seitenansicht ähnlich Fig. 1 eines Sattelanhängers mit verändertem Vorder- und Hinterteil,
- Fig. 5: eine Draufsicht auf die Darstellung gemäß Fig. 4,
- Fig. 6: ein längsrandseitig erweitertes Fahrgestell in einer Draufsicht ähnlich Fig. 5,
- Fig. 7: eine schematische Seitenansicht ähnlich Fig. 1 oder Fig. 4 eines Sattelanhängers, mit verändertem Vorder- und Hinterteil,
- Fig. 8: eine Draufsicht auf die Darstellung gemäß Fig. 7, und
- Fig. 9: ein längsrandseitig erweitertes Fahrgestell in einer Draufsicht ähnlich Fig. 8.

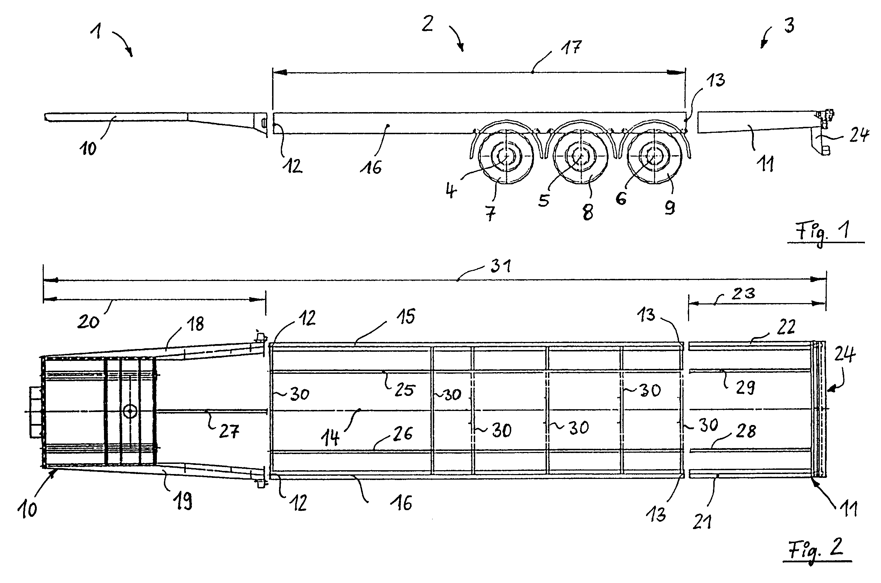

Die Fig. 1 zeigt die Hauptteile eines Chassis eines Sattelanhängers nach der Erfindung. Das Chassis ist dreiteilig ausgebildet und umfaßt ein vorderes Chassisteil 1, ein mittleres Chassisteil 2 und ein hinteres Chassisteil 3. Das mittlere Chassisteil 2 ist in der dargestellten Ausführungsform mit mehreren Radachsen 4,5,6 mit Laufrädern 7, 8,9 für die Abstützung des Chassis versehen.

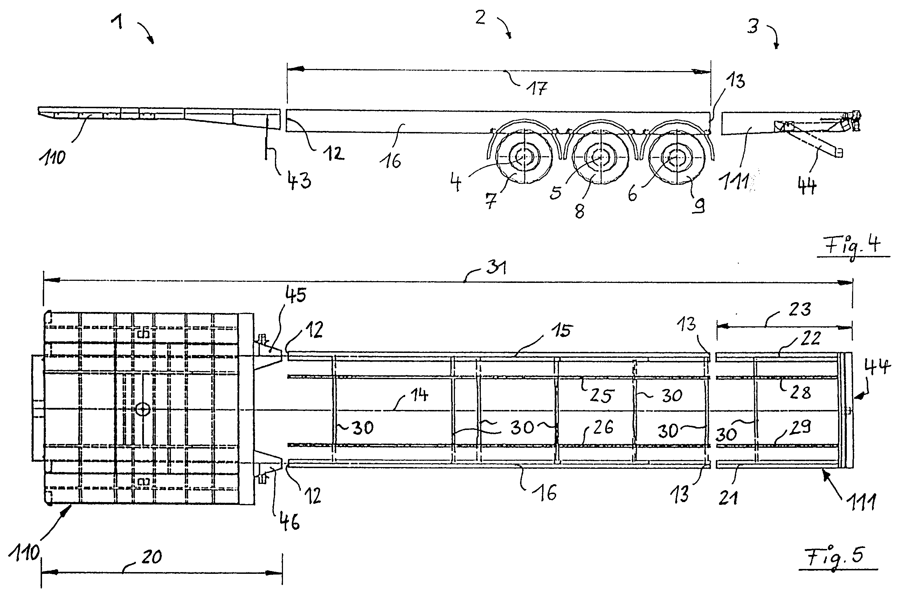

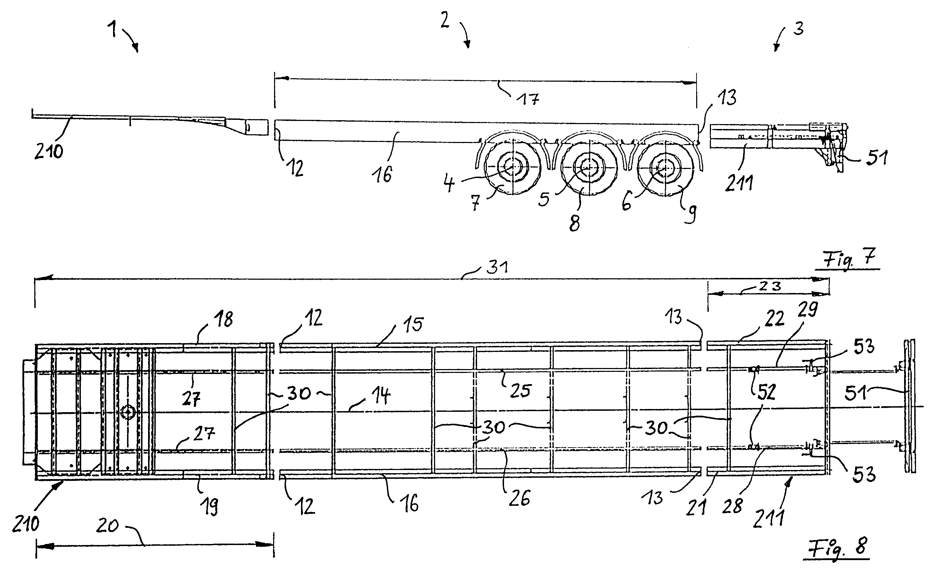

Der mittlere Chassisteil 2 ist als ein Standardsegment ausgebildet, das mit dem vorderen Chassisteil 1 sowie dem hinteren Chassisteil 3 als in Länge und/oder Ausbildung variable Anbauteile 10,11 zum Chassis des Sattelanhängers komplettiert ist. Dadurch sind mit geringem Aufwand unterschiedliche Bauformen von Sattelanhängern verwirklichbar, bei denen ein gleichbleibendes Standardsegment im Bereich seines vorderen Endes 12 und seines hinteren Endes 13 jeweils mit dem vorderen Anbauteil 10 bzw. dem hinteren Anbauteil 11 unterschiedlicher Ausbildung verbunden sind (Fig. 4, Fig. 7). Im Bereich der Enden 12,13 sind dazu entsprechende, nicht näher veranschaulichte Anschlußprofile zwischen Standardsegment und den Anbauteilen 10,11 angeordnet.

Gemäß Fig. 2 weist das Standardsegment zwei parallel und symmetrisch zu einer vertikalen Längsmittelebene 14 verlaufende Längsrahmenstreben 15,16 auf, die mit einer innerhalb einer Bauserie konstanten Bauteillänge 17 (Fig. 1) ausgebildet sind und in vorteilhafter Ausführung jeweils aus einem einstückigen Walzprofil bestehen, das auch als ein aus einzelnen Abschnitten verschweißter Träger (nicht dargestellt) ausgebildet sein kann. Die Länge 17 der Längsrahmenstreben 15,16 liegt im Bereich von 5,00 bis 8,00 m, vorzugsweise 7,00 m, und bestimmt die Länge des Standardsegmentes.

Das vordere Anbauteil 10 weist zwei längslaufende Hauptträgerteile 18,19 auf, deren rückwärtige Enden mit vorderen, an den vorderen Enden 12 der jeweiligen Längsrahmenstreben 15,16 des Standardsegments als die Anschlußprofile ausgebildeten Verbindungsplatten (nicht dargestellt) verschweißbar sind.

Die Länge 20 des vorderen Anbauteils 10 kann 3,00 bis 4,00 m betragen und liegt bevorzugt bei 3,70 m.

Das hintere Anbautteil 11 weist längslaufende Hauptträgerteile 21,22 auf, deren vordere Enden mit den jeweiligen hinteren Enden 13 der als Verbindungsplatten ausgebildeten Anschlußprofilen an den Längsrahmenstreben 15,16 des Standardsegmentes verschweißbar sind. Das hintere Anbauteil 11 ist in einer Länge 23 im Bereich von 1,00 bis 3,50 m variabel, wobei die vorzugsweise hinteren Anbauteile 11 eine Länge von 2,60 m haben.

Das hintere Anbauteil 11 ist in der Ausführung gemäß Fig. 1 mit einem Unterfahrschutz 24 versehen, der den hinteren Abschluß des Chassis bildet.

Das Chassis umfaßt parallel zur Längsmittelebene 14 verlaufende innere Zwischenlängsstreben 25,26;27;28,29 (Fig. 2), die sowohl im Standardsegment als auch in den Anbauteilen 10,11 zur Stabilisierung des Chassis vorgesehen sind, wobei zumindest im Bereich des Standardsegmentes mit Querrahmenstreben 30 eine verwindungssteife Verbindung der Längsrahmenstreben 15,16 und der Zwischenlängsstreben vorgesehen ist.

Das Chassis ist in einer Gesamtlänge 31 von 11,00 bis 15,50 m, vorzugsweise von 12,20 m bis 13,60 m, variabel und damit an verschiedene Aufgaben mit geringem technologischen Aufwand anpaßbar.

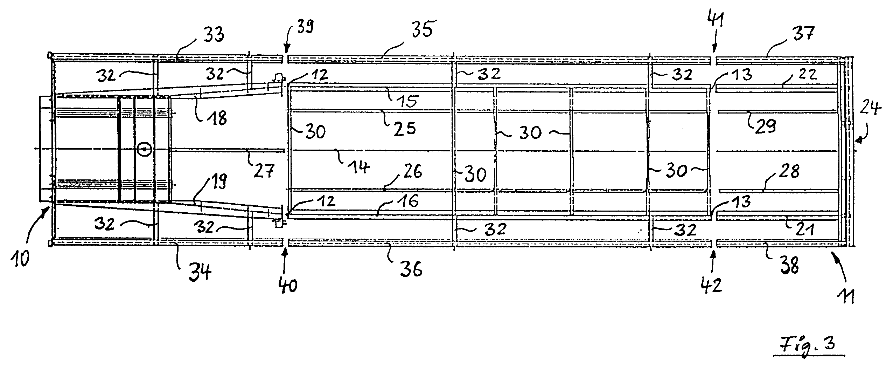

In der Ausführungsform gemäß Fig. 3 ist das Chassis, beispielsweise zur Bildung einer Ladungspritsche, längsrandseitig erweitert, wobei zusätzliche Querrahmenstreben 32 äußere Längsträgerteile 33,34;35,36;37,38 abstützen, so daß insgesamt eine breite Ladefläche gebildet ist. Die Längsträgerteile 33 bis 38 können in Verbindungsbereichen 39,40,41,42 ebenso verschweißt werden wie die Verbindungsplatten an den Anschlußprofilen im Bereich der inneren Längsrahmenstreben 15,16 an den Enden 12,13.

Die Darstellungen gemäß Fig. 4 bis 6 veranschaulichen ein Chassis, das von einem in der Länge 17 gegenüber der Ausführung gemäß Fig. 1 bis 3 unveränderten Standardsegment als mittlerem Chassisteil 2 gebildet ist. Mit dem Standardsegment ist ein vorderes Anbauteil 110 verbunden, das als Stahlblechverbundkörper ausgebildet ist und nahe dem Verbindungsbereich zum Standardsegment mit einer Stützwinde 43 versehen ist. Die Draufsicht auf das Chassis gemäß Fig. 5 verdeutlicht, daß den vorderen Enden 12 des mittleren Chassisteiles 2 die Anschlußprofile aufweisende Verbindungsstutzen 45,46 des vorderen Anbauteils 110 zugeordnet sind.

Die Ausbildung des Chassis gemäß Fig. 4 ist zur Darstellung gemäß Fig. 1 lediglich dadurch erweitert, daß ein hinteres Anbauteil 111 mit einem klappbaren Unterfahrschutz 44 ausgebildet ist.

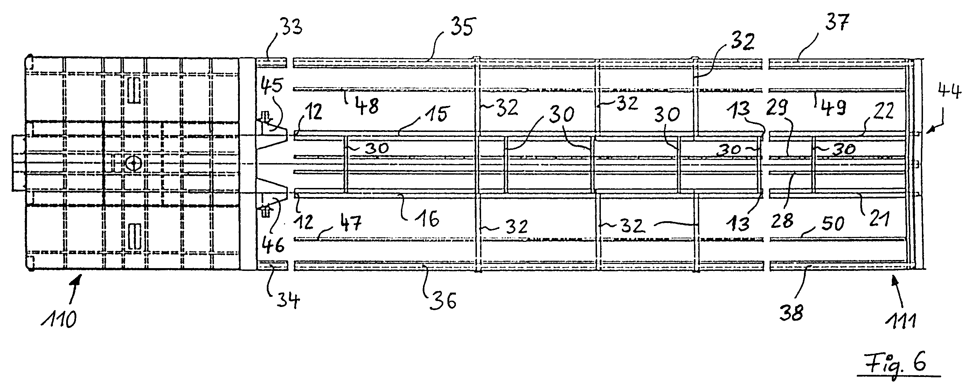

Das erweiterte Chassis gemäß Fig. 6 ist im äußeren Bereich zwischen den Längsrahmenstreben 15,16 und den äußeren Längsträgerteilen 33 bis 38 mit zusätzlichen Zwischenstreben 47, 48 versehen, um die Verwindungssteife des Chassis auch bei großer Gesamtbreite zu gewährleisten.

Eine weitere Ausführungsform des erfindungsgemäßen Sattelanhängers ist durch die Variation gemäß Fig. 7 bis 9 veranschaulicht. Aufbauend auf dem Standardsegment (Fig. 7) als mittlerer Chassisteil 2 wird die Gesamtlänge 31 über ein verändertes vorderes Anbauteil 210 und ein verändertes hinteres Anbauteil 211 erreicht, womit kundenspezifisch variierten Anforderungen gegenüber den Ausführungsformen in Fig. 1 und Fig. 4 Rechnung getragen werden kann.

In Fig. 8 ist veranschaulicht, daß der vordere Chassisteil 1 als plattenförmiger Anbauteil 210 ausgebildet ist, dessen Hauptträgerteile 18,19 zum vorderen Ende 12 (Fig. 7) der jeweiligen Längsrahmenstreben 15,16 des mittleren Chassisteils 2 gerichtet sind (ähnlich Fig. 3).

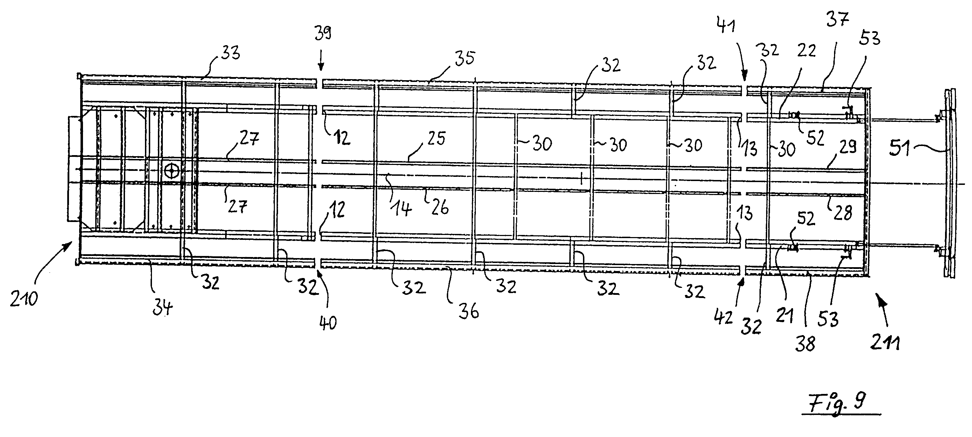

Das hintere Anbauteil 211 ist im Bereich der zwischen den längslaufenden Hauptträgerteilen 21,22 angeordneten Zwischenlängsrahmenstreben 28,29 mit einer ausziehbaren Längsholzstütze 51 (Fig. 7) versehen, die über eine Führung 52 und zumindest ein Verriegelungselement 53 mit den Zwischenlängsrahmenstreben 28,29 (Fig. 8) bzw. mit den Hauptträgerteilen 21,22 (Fig. 9) ausziehbar verbunden ist und eine Vergrößerung der Gesamtlänge 31 ermöglicht.

Die vorbeschriebenen Ausführungsformen des erfindungsgemäßen Sattelanhängers können durch variablen Austausch der jeweiligen vorderen Anbauteile 10;110;210 bzw. der hinteren Anbauteile 11;111;211 weitere veränderte Bauformen gebildet werden, wobei lediglich eine Anpassung des mittleren Chassisteiles 2 als Standardsegment durchzuführen ist.

## Patentansprüche

1. Sattelanhänger, insbesondere für Container, der einen vorderen Chassisteil (1) und einen sich daran rückwärts anschließenden Chassisteil aufweist, der zwei zu einer Längsmittelebene (14) symmetrische Längsrahmenstreben (15,16) als Hauptträger, Querrahmenstreben (30,32) sowie eine oder mehrere Radachsen (4,5,6) umfaß, **dadurch gekennzeichnet,** daß das Chassis dreiteilig ausgebildet ist, der mittlere Chassisteil (2) ein Standardsegment bildet und das vordere und das hintere Chassisteil (1,3) als in Länge und/oder Ausbildung variabel vorfertigbare Anbauteile (10,11;110,111;210,211) ausgebildet und mit dem Standardsegment jeweils im Bereich von Anschlußprofilen verbunden sind.

2. Sattelanhänger nach Anspruch 1, dadurch gekennzeichnet, daß das Standardsegment an beiden Enden (12,13) seiner Längsrahmenstreben (15,16) jeweils eine angeschweißte Verbindungsplatte als Anschlußprofil aufweist.

3. Sattelanhänger nach Anspruch 1 oder 2, dadurch gekennzeichnet, daß die Längsrahmenstreben (15,16) des Standardsegments mit einer innerhalb einer Bauserie konstanten Bauteillänge (17) ausgebildet sind.

4. Sattelanhänger nach einen der Ansprüche 1 bis 3, dadurch gekennzeichnet, daß das Standardsegment als Längsrahmenstreben (15,16) einstückige Walzprofile aufweist, die eine Länge (17) von 5,00 m bis 8,00 m, vorzugsweise 7,00 m, haben.

5. Sattelanhänger nach einem der Ansprüche 1 bis 4, dadurch gekennzeichnet, daß das vordere Anbauteil (10;110;210) längslaufende Hauptträgerteile (18,19;27) aufweist und deren rückwärtige Enden mit den vorderen Enden (12) des Standardsegments über die Verbindungsplatten verschweißt sind.

6. Sattelanhänger nach Anspruch 5, dadurch gekennzeichnet, daß die Länge (20) des vorderen Anbauteils (10,110;210) 3,00 m bis 4,00 m, vorzugsweise 3,70 m, beträgt.

7. Sattelanhänger nach einem der Ansprüche 1 bis 6, dadurch gekennzeichnet, daß das Hintersegment (11;111; 211) längslaufende Hauptträgerteile (21,22) aufweist, deren vordere Enden mit den hinteren Enden des Standardsegments über Verbindungsplatten verschweißt sind.

8. Sattelanhänger nach Anspruch 7, dadurch gekennzeichnet, daß das Hintersegment (11;111;211) eine Länge (23) von 1,00 m bis 3,50 m, vorzugsweise 2,60 m, aufweist.

9. Sattelanhänger nach Anspruch 7 oder 8, dadurch gekennzeichnet, daß das Hintersegment (11) einen endseitigen Unterfahrschutz (24) aufweist.

10. Sattelanhänger nach Anspruch 9, dadurch gekennzeichnet, daß im Endbereich des Hintersegmentes (111) ein klappbarer Unterfahrschutz (44) angeordnet ist.

11. Sattelanhänger nach einem der Ansprüche 8 bis 10, dadurch gekennzeichnet, daß das Hintersegment (211) eine ausziehbare Langholzstütze (51) aufweist.

12. Sattelanhänger nach Anspruch 11, dadurch gekennzeichnet, daß die Langholzstütze (51) über eine Führung (52) und ein Verriegelungselement (53) mit den Hauptträgerteilen (21,22) oder mit Zwischenlängsstreben (28,29) des hinteren Anbauteils (211) verbunden ist.

13. Sattelanhänger nach einem der Ansprüche 1 bis 12, dadurch gekennzeichnet, daß das Chassis in der Gesamtlänge (31) von 11 m bis 15,5 m, vorzugsweise zwischen 12,20 m bis 13,60 m, variabel ist.

14. Sattelanhänger nach einem der Ansprüche 1 bis 13, dadurch gekennzeichnet, daß im Bereich des rückwärtigen Endes des vorderen Anbauteils (110) eine Stützwinde (43) angeordnet ist.
